# EUROPEAN PATENT APPLICATION

(11) **EP 4 590 054 A1**
(43) Date of publication of application: **23.07.2025**
(21) Application number: 23893647.0
(22) Date of filing: 09.11.2023
(51) Int. Cl.: H04W 72/25

(54) **COMMUNICATION METHOD AND APPARATUS**

(30) Priority: 26.11.2022 CN 202211495059; 26.12.2022 CN 202211678580
(71) Applicant: Huawei Technologies Co., Ltd., Shenzhen, Guangdong 518129 (CN)
(72) Inventor: WU, Yue, Shenzhen, Guangdong 518129 (CN); LI, Xueru, Shenzhen, Guangdong 518129 (CN)
(74) Representative: MERH-IP Matias Erny Reichl Hoffmann Patentanwälte PartG mbB
(86) International application number: PCT/CN2023/130824
(87) International publication number: WO 2024/109556

(57) **Abstract**

This application relates to a communication method and an apparatus. A second terminal device receives first information from a first terminal device on a first resource, where the first information indicates a first reserved resource and a first PDB, and the first reserved resource is a resource reserved by the first terminal device for first data. If the first reserved resource and a second reserved resource have an intersection in each of time domain and frequency domain, and a priority of the first data is the same as a priority of second data, the second terminal device reselects a resource for the second data when a transmission deadline of the second data meets a first condition, where the second reserved resource is a resource reserved by the second terminal device for the second data, and the first condition includes: the transmission deadline of the second data is later than a transmission deadline of the first data. That the transmission deadline of the second data is later than the transmission deadline of the first data indicates that there are more resources for the second terminal device to select. Therefore, the second terminal device gives up using the second reserved resource, thereby reducing a resource conflict probability.

## Description

### CROSS-REFERENCE TO RELATED APPLICATIONS

This application claims priorities to Chinese Patent Application No. 202211495059.3, filed with the China National Intellectual Property Administration on November 26, 2022 and entitled "SIDELINK COMMUNICATION METHOD AND DEVICE", and to Chinese Patent Application No. 202211678580.0, filed with the China National Intellectual Property Administration on December 26, 2022 and entitled "COMMUNICATION METHOD AND APPARATUS", both of which are incorporated herein by reference in their entireties.

### TECHNICAL FIELD

This application relates to the field of communication technologies, and in particular, to a communication method and an apparatus.

### BACKGROUND

Currently, in a sidelink (sidelink, SL) communication process, a user equipment (user equipment, UE) may reserve a periodic resource for to-be-sent data, so that the reserved resource can be used to send the data. However, different UEs may reserve a same resource. This may cause a resource conflict.

### SUMMARY

Embodiments of this application provide a communication method and an apparatus, to reduce a resource conflict probability.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is also referred to as, for example, a second terminal device. The method includes: receiving first information from a first terminal device on a first resource, where the first information indicates a first reserved resource and a first PDB, the first reserved resource is a resource reserved by the first terminal device for first data, and the first PDB is determined by the first terminal device based on a PDB of the first data and sending time of the first information; and if the first reserved resource and a second reserved resource have an intersection in each of time domain and frequency domain, and a priority of the first data is the same as a priority of second data, reselecting a resource for the second data when a transmission deadline of the second data meets a first condition, where the second reserved resource is a resource reserved by the second terminal device for the second data, and the transmission deadline of the second data is determined based on a PDB of the second data. The first condition includes: the transmission deadline of the second data is later than a transmission deadline of the first data, and the transmission deadline of the first data is determined based on the first PDB and receiving time of the first information.

In this embodiment of this application, if the first reserved resource reserved by the first terminal device for the first data and the second reserved resource reserved by the second terminal device for the second data have an intersection in each of time domain and frequency domain, it indicates that resources reserved by the two terminal devices conflict. In this case, if the transmission deadline of the second data is later than the transmission deadline of the first data, it indicates that in comparison with the first terminal device, if the second terminal device gives up the second reserved resource, there are more resources for the second terminal device to select. Therefore, the second terminal device may reselect a resource. It may be understood as that the second terminal device may give up using the second reserved resource and reselect a resource, thereby reducing a resource conflict probability. In addition, the first condition in embodiments of this application is applicable to a case in which the priority of the first data is the same as the priority of the second data. To be specific, even if the priorities of the two pieces of data are the same, whether to preempt a resource cannot be determined by using the priorities, and the resource conflict probability can also be reduced by using the solution provided in embodiments of this application.

In an optional implementation, the first condition further includes one or more of the following: A difference between the transmission deadline of the second data and the transmission deadline of the first data is greater than a first threshold; a received power corresponding to the first resource is greater than a second threshold; or duration of a second resource selection window is greater than a third threshold, where the second resource selection window is a resource selection window used by the second terminal device to reselect a resource for the second data. If the difference between the transmission deadline of the second data and the transmission deadline of the first data is greater than the first threshold, it indicates that remaining transmission time of the second data is sufficient. Therefore, there are more resources for the second terminal device to select. Even if the second terminal device gives up the second reserved resource, there is a high probability that the second terminal device can reselect a proper resource. In this case, the second terminal device may give up the second reserved resource and reselect a resource, and the first terminal device may occupy the first reserved resource for transmission. If the received power corresponding to the first resource is greater than the second threshold, it indicates that the first terminal device may cause interference to transmission of the second terminal device, and if a reserved resource of the first terminal device conflicts with a reserved resource of the second terminal device, the second terminal device may perform interference avoidance. For example, the second terminal device may give up the reserved resource. If the duration of the second resource selection window is greater than the third threshold, the second terminal device may select a resource in a long resource selection window. It also indicates that there are sufficient candidate resources for the second data, so that a case in which the second terminal device cannot select a proper resource after giving up the second reserved resource is avoided as much as possible. Even if the second terminal device gives up the second reserved resource, there is a high probability that the second terminal device can reselect a proper resource. In this case, the second terminal device may give up the second reserved resource and reselect a resource, and the first terminal device may occupy the first reserved resource for the transmission.

In an optional implementation, the method further includes: sending, to a higher layer of the second terminal device, an indication indicating that the second reserved resource is preempted. If the first condition is met, a physical layer of the second terminal device may send, to the higher layer (for example, an RRC layer or another protocol layer) of the second terminal device, the indication indicating that the second reserved resource is preempted, so that the higher layer of the second terminal device determines no longer to use the second reserved resource, and the physical layer of the second terminal device no longer uses the second reserved resource to perform data transmission.

In an optional implementation, the first information is included in side control information. The side control information is, for example, SCI, for example, SCI 1 or SCI 2.

In an optional implementation, that the first information indicates the first PDB includes: The first information indicates a proportion of the first PDB to the PDB of the first data, where the PDB of the first data is associated with the priority of the first data; the first information indicates a range to which a proportion of the first PDB to the PDB of the first data belongs, and the PDB of the first data is associated with the priority of the first data; the first information indicates a range to which the first PDB belongs; or the first information includes the first PDB. The first information may indicate the first PDB in a plurality of different manners. This is flexible.

In an optional implementation, the first information includes a first field, and the first field includes the first PDB. If a value of the first field is a first value, it indicates that the first PDB is greater than or equal to 2ⁿ - 1, where n represents a quantity of bits occupied by the first field; or if a value of the first field is not a first value, the value of the first field is the first PDB. When a value of the first PDB is large, the range to which the first PDB belongs may be indicated, and a specific value of the first PDB does not need to be indicated, so that the quantity of bits occupied by the first field can be reduced.

In an optional implementation, the method further includes: sending second information. The second information indicates the second reserved resource and a second PDB, and the second PDB is determined based on the PDB of the second data and sending time of the second information. The second terminal device may determine, based on information (for example, the first information) from another terminal device, whether to reselect a resource or preempt the resource. In addition, the second terminal device may also send the second information, and the another terminal device (for example, the first terminal device) may also determine, based on the second information from the second terminal device, whether to reselect a resource or preempt the resource.

According to a second aspect, a second communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is also referred to as, for example, a third terminal device. The method includes: receiving first information from a first terminal device on a first resource, and receiving second information from a second terminal device on a second resource, where the first information indicates a first reserved resource and a first PDB, the first reserved resource is a resource reserved by the first terminal device for first data, the first PDB is determined by the first terminal device based on a PDB of the first data and sending time of the first information, the second information indicates a second reserved resource and a second PDB, the second reserved resource is a resource reserved by the second terminal device for second data, and the second PDB is determined by the second terminal device based on a PDB of the second data and sending time of the second information; and sending third information to a fourth terminal device on a fourth feedback channel, where the third information indicates a resource conflict, the third information is determined based on the first information and the second information, the first reserved resource and the second reserved resource have an intersection in each of time domain and frequency domain, and a priority of the first data is the same as a priority of the second data. If first duration is greater than second duration, the fourth terminal device is the first terminal device, and the fourth feedback channel is a feedback channel associated with the first data or a feedback channel associated with the first reserved resource; or if second duration is greater than first duration, the fourth terminal device is the second terminal device, and the fourth feedback channel is a feedback channel associated with the second data or a feedback channel associated with the second reserved resource. The first duration is determined based on the feedback channel associated with the first data or the feedback channel associated with the first reserved resource and the first PDB, and the second duration is determined based on the feedback channel associated with the second data or the feedback channel associated with the second reserved resource and the second PDB.

In this embodiment of this application, if the first reserved resource reserved by the first terminal device for the first data and the second reserved resource reserved by the second terminal device for the second data have an intersection in each of time domain and frequency domain, it indicates that resources reserved by the two terminal devices conflict. In this case, the third terminal device may decide to indicate a resource conflict to the first terminal device or the second terminal device, thereby reducing a resource conflict probability. In addition, this embodiment of this application is applicable to a case in which the priority of the first data is the same as the priority of the second data. To be specific, even if the priorities of the two pieces of data are the same, whether to preempt a resource cannot be determined by using the priorities, and the resource conflict probability can also be reduced by using the solution provided in embodiments of this application.

In an optional implementation, if the first duration is greater than the second duration, and third duration is greater than or equal to a fourth threshold, the fourth terminal device is the first terminal device, and the third duration is duration between a time domain position of the fourth feedback channel and a time domain position of the first reserved resource. The first duration is greater than the second duration, and it indicates that, compared with the second terminal device, the first terminal device has more candidate resources, and a probability of selecting a proper resource is higher. The third duration is greater than or equal to the fourth threshold, and it indicates that the first terminal device has sufficient time to complete resource reselection. Therefore, the third terminal device may indicate the resource conflict to the first terminal device. For example, the second terminal device may preempt a resource.

In an optional implementation, if the second duration is greater than the first duration, and fourth duration is greater than or equal to a fourth threshold, the fourth terminal device is the second terminal device, and the fourth duration is duration between a time domain position of the fourth feedback channel and a time domain position of the second reserved resource. The second duration is greater than the first duration, and it indicates that, compared with the first terminal device, the second terminal device has more candidate resources, and the probability of selecting the proper resource is higher. The fourth duration is greater than or equal to the fourth threshold, and it indicates that the second terminal device has sufficient time to complete the resource reselection. Therefore, the third terminal device may indicate the resource conflict to the second terminal device. For example, the first terminal device may preempt the resource.

In an optional implementation, if the third terminal device receives the first data on the first reserved resource, and a second received power is greater than a fifth threshold, or a second received power is greater than a value determined based on a first received power and a sixth threshold, the fourth terminal device is the second terminal device or the first terminal device. Alternatively, if the third terminal device receives the second data on the second reserved resource, and a first received power is greater than a fifth threshold, or a first received power is greater than a value determined based on a second received power and a sixth threshold, the fourth terminal device is the second terminal device or the first terminal device. The second received power is a received power obtained by the third terminal device through measurement on the second resource, and the first received power is a received power obtained by the third terminal device through measurement on the first resource. If the third terminal device is to receive the first data on the first reserved data, and interference caused by the second terminal device is large, the third terminal device may indicate the first terminal device to reselect a resource to send the first data, so as to reduce the interference. Alternatively, in this case, the third terminal device may indicate the second terminal device to reselect a resource. Alternatively, if the third terminal device is to receive the second data on the second reserved data, and interference caused by the first terminal device is large, the third terminal device may indicate the first terminal device to reselect a resource, so as to reduce the interference to receiving the second data. Alternatively, in this case, the third terminal device may indicate the second terminal device to reselect a resource to send the second data.

In an optional implementation, the first information is included in side control information.

In an optional implementation, that the first information indicates the first PDB includes: The first information indicates a proportion of the first PDB to the PDB of the first data, where the PDB of the first data is associated with the priority of the first data; the first information indicates a range to which a proportion of the first PDB to the PDB of the first data belongs, and the PDB of the first data is associated with the priority of the first data; the first information indicates a range to which the first PDB belongs; or the first information includes the first PDB.

In an optional implementation, the first information includes a first field, and the first information includes the first PDB. If a value of the first field is a first value, it indicates that the first PDB is greater than or equal to 2ⁿ - 1, where n represents a quantity of bits occupied by the first field; or if a value of the first field is not a first value, the value of the first field is the first PDB.

In an optional implementation, the feedback channel associated with the first reserved resource and the feedback channel associated with the second reserved resource have an intersection in time domain, and have no intersection in code domain and/or frequency domain. In this embodiment of this application, a feedback channel associated with a reserved resource may not be used to performing transmission of feedback information. For example, the feedback channel is dedicated to performing transmission of information indicating the resource conflict (for example, the third information). For example, the feedback channel associated with the first reserved resource is dedicated to performing transmission of information indicating the resource conflict to the first terminal device, and the feedback channel associated with the second reserved resource is dedicated to performing transmission of information indicating the resource conflict to the second terminal device. Because the first reserved resource and the second reserved resource have an intersection in each of time domain and frequency domain, optionally, the feedback channel associated with the first reserved resource and the feedback channel associated with the second reserved resource may have an intersection in time domain. In addition, the two feedback channels may not overlap in frequency domain and/or code domain, to perform transmission of different feedback information.

For technical effects brought by some optional implementations of the second aspect, refer to the descriptions of the technical effects of corresponding implementations of the first aspect.

According to a third aspect, a third communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is also referred to as, for example, a fourth terminal device, and the fourth terminal device is, for example, a first terminal device or a second terminal device. The method includes: receiving third information from a third terminal device, where the third information indicates a resource conflict; and reselecting a resource for third data based on the third information. The third information may be determined by the third terminal device based on first information and second information. The first information is from the first terminal device, and indicates a first reserved resource and a first PDB. The first reserved resource is a resource reserved by the first terminal device for first data, and the first PDB is determined by the first terminal device based on a PDB of the first data and sending time of the first information. The second information is from the second terminal device, and the second information indicates a second reserved resource and a second PDB. The second reserved resource is a resource reserved by the second terminal device for second data, and the second PDB is determined by the second terminal device based on a PDB of the second data and sending time of the second information. The first reserved resource and the second reserved resource have an intersection in each of time domain and frequency domain, and a priority of the first data is the same as a priority of the second data.

In an optional implementation, the method further includes: sending, to a higher layer of the fourth terminal device, an indication indicating that a third reserved resource is preempted, where the third reserved resource is a resource reserved by the fourth terminal device for the third data.

In an optional implementation, the method further includes: sending fourth information, where the fourth information indicates the third reserved resource and a third PDB, the third reserved resource is a resource reserved by the fourth terminal device for the third data, and the third PDB is determined based on a PDB of the third data and sending time of the fourth information.

In an optional implementation, the fourth information is included in side control information.

In an optional implementation, that the fourth information indicates the third PDB includes: The fourth information indicates a proportion of the third PDB to the PDB of the third data, and the PDB of the third data is associated with a priority of the third data; the fourth information indicates a range to which a proportion of the third PDB to the PDB of the third data belongs, and the PDB of the third data is associated with a priority of the third data; the fourth information indicates a range to which the third PDB belongs; or the fourth information includes the third PDB.

In an optional implementation, the fourth information includes a first field, and the fourth information includes the third PDB. If a value of the fourth field is a first value, it indicates that the third PDB is greater than or equal to 2ⁿ - 1, where n represents a quantity of bits occupied by the first field; or if a value of the first field is not a first value, the value of the first field is the third PDB.

For technical effects brought by the third aspect or the optional implementations of the third aspect, refer to the descriptions of technical effects of the first aspect or the related implementations of the first aspect, and/or refer to the descriptions of technical effects of the second aspect or the related implementations of the second aspect.

According to a fourth aspect, a communication apparatus is provided. The communication apparatus may be the second terminal device according to any one of the first aspect to the third aspect. The communication apparatus has a function of the foregoing second terminal device. The communication apparatus is, for example, the second terminal device, a large device including the second terminal device, or a functional module in the second terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive first information from a first terminal device on a first resource, where the first information indicates a first reserved resource and a first PDB, the first reserved resource is a resource reserved by the first terminal device for first data, and the first PDB is determined by the first terminal device based on a PDB of the first data and sending time of the first information. The processing unit is configured to: if the first reserved resource and a second reserved resource have an intersection in each of time domain and frequency domain, and a priority of the first data is the same as a priority of second data, reselect a resource for the second data when a transmission deadline of the second data meets a first condition, where the second reserved resource is a resource reserved by the second terminal device for the second data, and the transmission deadline of the second data is determined based on a PDB of the second data. The first condition includes: The transmission deadline of the second data is later than a transmission deadline of the first data, where the transmission deadline of the first data is determined based on the first PDB and receiving time of the first information.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the second terminal device according to any one of the first aspect to the third aspect.

According to a fifth aspect, a communication apparatus is provided. The communication apparatus may be the third terminal device according to any one of the first aspect to the third aspect. The communication apparatus has a function of the foregoing third terminal device. The communication apparatus is, for example, the third terminal device, a large device including the third terminal device, or a functional module in the third terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or a receiving unit) is configured to: receive first information from a first terminal device on a first resource, and receive second information from a second terminal device on a second resource, where the first information indicates a first reserved resource and a first PDB, the first reserved resource is a resource reserved by the first terminal device for first data, the first PDB is determined by the first terminal device based on a PDB of the first data and sending time of the first information, the second information indicates a second reserved resource and a second PDB, the second reserved resource is a resource reserved by the second terminal device for second data, and the second PDB is determined by the second terminal device based on a PDB of the second data and sending time of the second information. The transceiver unit (or a sending unit) is configured to send third information to a fourth terminal device on a fourth feedback channel, where the third information indicates a resource conflict, the third information is determined based on the first information and the second information, the first reserved resource and the second reserved resource have an intersection in each of time domain and frequency domain, and a priority of the first data is the same as a priority of the second data. If first duration is greater than second duration, the fourth terminal device is the first terminal device, and the fourth feedback channel is a feedback channel associated with the first data or a feedback channel associated with the first reserved resource; or if second duration is greater than first duration, the fourth terminal device is the second terminal device, and the fourth feedback channel is a feedback channel associated with the second data or a feedback channel associated with the second reserved resource. The first duration is determined based on the feedback channel associated with the first data or the feedback channel associated with the first reserved resource and the first PDB, and the second duration is determined based on the feedback channel associated with the second data or the feedback channel associated with the second reserved resource and the second PDB.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the third terminal device according to any one of the first aspect to the third aspect.

According to a sixth aspect, a communication apparatus is provided. The communication apparatus may be the fourth terminal device according to any one of the first aspect to the third aspect. The communication apparatus has a function of the foregoing fourth terminal device. The communication apparatus is, for example, the fourth terminal device, a large device including the fourth terminal device, or a functional module in the fourth terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or a receiving unit) is configured to receive third information from a third terminal device, where the third information indicates a resource conflict; and the processing unit is configured to reselect a resource for third data based on the third information.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the fourth terminal device according to any one of the first aspect to the third aspect.

According to a seventh aspect, a communication apparatus is provided. The communication apparatus may be a second terminal device, or may be a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to an eighth aspect, a communication apparatus is provided. The communication apparatus may be a third terminal device, or a chip or a chip system used in the third terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the third terminal device in the foregoing aspects.

According to a ninth aspect, a communication apparatus is provided. The communication apparatus may be a fourth terminal device, or may be a chip or a chip system used in the fourth terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the fourth terminal device in the foregoing aspects.

According to a tenth aspect, a communication system is provided. The communication system includes a second terminal device and a first terminal device. The first terminal device is configured to perform the method performed by the first terminal device according to any one of the first aspect to the third aspect, and the second terminal device is configured to perform the method performed by the second terminal device according to any one of the first aspect to the third aspect. For example, the second terminal device may be implemented by using the communication apparatus according to the fourth aspect or the seventh aspect, or implemented by using the communication apparatus according to the sixth aspect or the ninth aspect; and the first terminal device may be implemented by using the communication apparatus according to the fourth aspect or the seventh aspect, or implemented by using the communication apparatus according to the sixth aspect or the ninth aspect.

Optionally, the system further includes a third terminal device, configured to perform the method performed by the third terminal device according to any one of the first aspect to the third aspect. For example, the third terminal device may be implemented by using the communication apparatus according to the fifth aspect or the eighth aspect.

According to an eleventh aspect, a computer-readable storage medium is provided. The computer-readable storage medium is configured to store a computer program or instructions. When the computer program or the instructions are run, the method performed by the first terminal device, the third terminal device, or the fourth terminal device in the foregoing aspects is implemented.

According to a twelfth aspect, a computer program product including instructions is provided. When the computer program product is run on a computer, the method according to the foregoing aspects is implemented.

According to a thirteenth aspect, a chip system is provided. The chip system includes a processor and an interface. The processor is configured to: invoke instructions from the interface and run the instructions, to enable the chip system to implement the method according to the foregoing aspects.

### BRIEF DESCRIPTION OF DRAWINGS

FIG. 1 is a diagram of an architecture of a communication network to which an embodiment of this application is applicable;
FIG. 2 is a flowchart of a communication method according to an embodiment of this application;
FIG. 3 is a diagram of a PDB of first data according to an embodiment of this application;
FIG. 4 is a diagram of reserving a same resource by different UEs according to an embodiment of this application;
FIG. 5 is a diagram of determining, by a first UE and/or a second UE, whether to reselect a resource according to an embodiment of this application;
FIG. 6 is a flowchart of another communication method according to an embodiment of this application;
FIG. 7A and FIG. 7B are two diagrams of determining, by a first UE and/or a second UE, whether to reselect a resource according to an embodiment of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, and are not used to limit sizes, content, sequences, time sequences, priorities, importance degrees, or the like of the plurality of objects. For example, a first resource and a second resource may be a same resource, or may be different resources. In addition, this name does not indicate that locations, sizes, application scenarios, priorities, importance degrees, or the like of the two resources are different. In addition, step numbers in embodiments described in this application are merely intended to distinguish between different steps, but are not intended to limit a sequence of the steps. For example, S201 may be performed before S202, may be performed after S202, or may be performed simultaneously with S202.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X) communication, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, smart wearable, smart transportation, a smart city (smart city), an uncrewed aerial vehicle, a robot, and the like. The terminal device may sometimes be referred to as a UE, a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a subsequently evolved base station in the 3rd generation partnership project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in the vehicle-to-everything (vehicle-to-everything, V2X) technology may be a road side unit (road side unit, RSU). The following uses an example in which the access network device is a base station for description. The base station may communicate with the terminal device, or may communicate with the terminal device through a relay station. The terminal device may communicate with a plurality of base stations of different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus that can support the network device to implement the function, for example, a chip system. The apparatus may be installed in the network device. In technical solutions provided in embodiments of this application, an example in which the apparatus configured to implement the function of the network device is a network device is used to describe the technical solutions provided in embodiments of this application.

Currently, in an SL communication process, a UE may reserve a periodic resource for to-be-sent data, so that the reserved resource can be used to send the data. However, different UEs may reserve a same resource. This may cause a resource conflict. To resolve this problem, a device-to-device preemption (preemption) mechanism is introduced in a resource allocation scheme in mode (mode) 2 (that is, a scheme in which the UE selects an SL resource by itself). This allows a sending device of a high-priority service to preempt a resource reserved by a sending device of a low-priority service, so that a transmission delay of the high-priority service can be reduced. However, if priorities of to-be-sent data of two devices are the same, currently, there is no solution, in other words, in a scenario in which data priorities are the same, a resource conflict still exists.

In view of this, the technical solutions in embodiments of this application are provided. In embodiments of this application, if a first reserved resource reserved by a first UE for first data and a second reserved resource reserved by a second UE for second data have an intersection in each of time domain and frequency domain, it indicates that resources reserved by the two UEs conflict. In this case, if a transmission deadline of the second data meets a first condition, the second UE may reselect a resource. It may be understood as that the second UE may give up using the second reserved resource and reselect a resource, thereby reducing a resource conflict probability. In addition, the first condition in embodiments of this application is applicable to a case in which a priority of the first data is the same as a priority of the second data. To be specific, even if the priorities of the two pieces of data are the same, whether to preempt a resource cannot be determined by using the priorities, and the resource conflict probability can also be reduced by using the solution provided in embodiments of this application.

The technical solutions provided in embodiments of this application may be applied to a 4th generation (4th generation, 4G) mobile communication technology system, for example, a long term evolution (long term evolution, LTE) system, may be applied to a 5th generation (5th generation, 5G) mobile communication technology system, for example, a new radio (new radio, NR) system, or may be applied to a next generation mobile communication system or another similar communication system, for example, a 6th generation (6th generation, 6G) mobile communication technology system. This is not specifically limited. In addition, the technical solutions in embodiments of this application may be applied to a device-to-device (device-to-device, D2D) scenario, for example, an NR-D2D scenario, or may be applied to a vehicle-to-everything (vehicle-to-everything, V2X) scenario, for example, an NR-V2X scenario, for example, may be used in a field like intelligent driving, assisted driving, or intelligent connected vehicles. If the technical solutions are applied to the D2D scenario, both communication parties may be UEs. If the technical solutions are applied to a non-D2D scenario, one party of communication may be a UE, and the other party may be a network device (for example, an access network device), or both communication parties may be network devices. In the following description process, an example in which both communication parties are UEs is used.

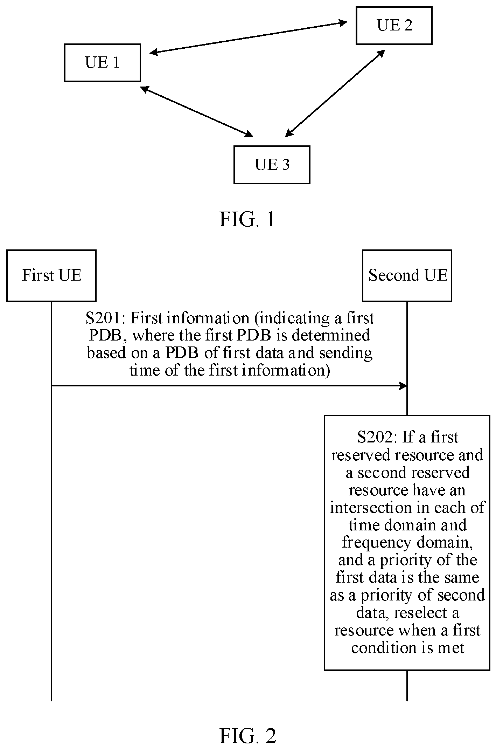

FIG. 1 shows an architecture of a communication network to which an embodiment of this application is applicable. FIG. 1 includes a UE 1, a UE 2, and a UE 3. The UE 1 may reserve a resource for to-be-sent data, and a receiving end of the data is, for example, the UE 2 or the UE 3, or may be another UE that is not included in FIG. 1. The UE 2 may also reserve a resource for the to-be-sent data, and a receiving end of the data is, for example, the UE 1 or the UE 3, or may be another UE that is not included in FIG. 1. The UE 1 may send information to indicate the reserved resource, and the UE 2 may also send information to indicate the reserved resource. For example, the UE 3 may receive the information. In addition, the UE 3 may also send information to the UE 1 and/or the UE 2.

To better describe embodiments of this application, the following describes methods provided in embodiments of this application with reference to the accompanying drawings. Unless otherwise specified below, in the accompanying drawings corresponding to embodiments of this application, steps represented by dashed lines are all optional steps. All the methods provided in embodiments of this application may be applied to the network architecture shown in FIG. 1. For example, a first UE in embodiments of this application may be the UE 1 in FIG. 1, a second UE in embodiments of this application may be the UE 2 in FIG. 1, and a third UE in embodiments of this application may be the UE 3 in FIG. 1.

An embodiment of this application provides a communication method. FIG. 2 is a flowchart of the method.

S201: A first UE sends first information on a first resource. Correspondingly, a second UE receives the first information on the first resource.

The first information may indicate a first reserved resource and a first packet delay budget (packet delay budget, PDB). The first reserved resource is a transmission resource reserved by the first UE for first data. The first PDB may be determined by the first UE based on a PDB of the first data and sending time of the first information.

A PDB of one piece of data may be defined as an upper limit of a possible transmission delay between a transmitting UE and a receiving UE of the data at a PC5 reference point. A delay deadline at which transmission of a physical layer transport block (transport block, TB) needs to be completed may be determined based on a PDB, and may be established by a V2X application. To ensure reliability, a UE generally performs one initial transmission and a plurality of retransmissions in the PDB. Optionally, a PDB of data is related to a priority of a service to which the data belongs. For example, there may be an association relationship between the priority of the service and the PDB. For example, a priority 1 is associated with a PDB 1, and a priority 2 is associated with a PDB 2. If a priority of a service is the priority 1, a PDB of the service is the PDB 1. Optionally, a higher priority of a service indicates that the service is more urgent, and in this case, a PDB corresponding to the priority may be smaller. On the contrary, a priority of a service is lower, and in this case, a PDB corresponding to the priority may be larger. A maximum quantity of retransmissions of the data may be predefined by using a protocol, may be configured by using information used to configure a resource pool, may be configured by the UE, or the like. A maximum quantity of retransmissions of data may be related to a service corresponding to the data. For example, different services have different maximum quantities of retransmissions. Alternatively, a maximum quantity of retransmissions of data may be unrelated to a service. For example, different services have a same maximum quantity of retransmissions.

For example, when a physical layer of the first UE performs resource selection for the first data, a higher layer (for example, a radio resource control (radio resource control, RRC) layer or another layer) of the first UE may indicate the remaining PDB of the first data to the physical layer. The remaining PDB is determined based on the PDB of the first data. For example, the remaining PDB is obtained by subtracting, from the PDB of the first data, time for processing the first data by an internal protocol layer of the first UE. The first PDB may be determined based on the remaining PDB and the sending time of the first information. For example, the first PDB is understood as duration, where start time of the first PDB is the time at which the first UE sends the first information, and end time of the first PDB is end time of the PDB of the first data. It may be understood as that, start time of the PDB of the first data is time at which the first UE obtains the first data. For the first data, time for internal processing of the first UE may have elapsed and time for waiting for arrival of a resource used to perform transmission of the first data and/or the first information may have elapsed when the first UE sends the first information. In this case, the first information may not indicate the PDB of the first data, but indicate the remaining PDB starting from the sending time of the first information, and the PDB indicated by the first information may be less than or equal to the PDB of the first data. In embodiments of this application, the "time" is, for example, a moment; or the "time" may be a time unit in which the moment is located. For example, current time may be a current slot (slot) or orthogonal frequency division multiplexing (orthogonal frequency division multiplexing, OFDM) symbol (symbol).

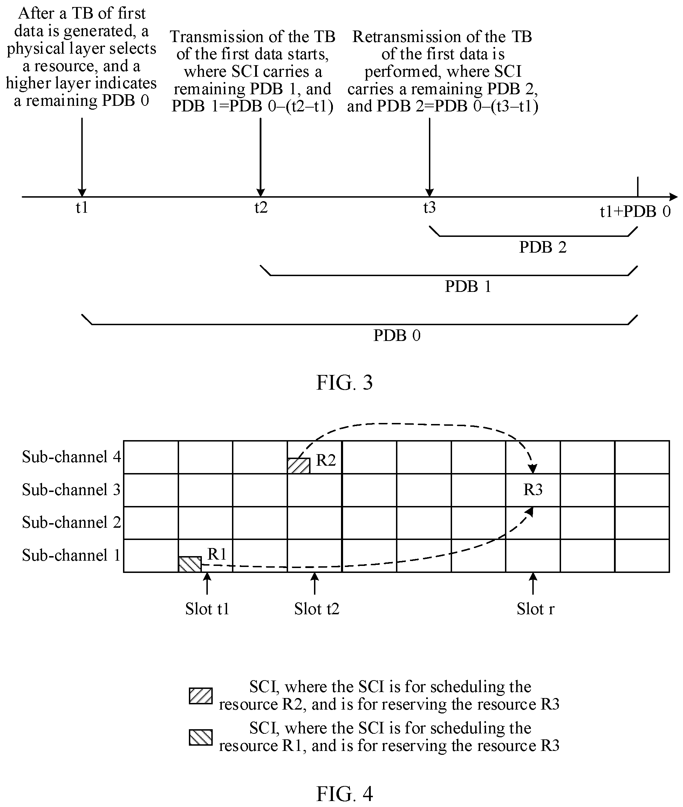

FIG. 3 is a diagram of a first PDB according to an embodiment of this application. For example, if the first UE obtains, at a moment t1, a TB including the first data, the physical layer of the first UE starts to perform a process of selecting a resource used for transmission of the first data, and the higher layer of the first UE may indicate the remaining PDB of the first data (or a remaining PDB of the TB) to the physical layer, for example, a PDB 0. After the physical layer completes the resource selection and successfully selects a resource (a slot t2), transmission of the TB may be started. For example, the first UE may send sidelink control information (sidelink control information, SCI). In this embodiment of this application, the SCI may indicate the first PDB by using the first information. For example, the first information is sent in the slot t2. In this case, the first PDB is, for example, a PDB 1, and PDB 1=PDB 0-(t2-t1). After the slot t2, if the first UE performs retransmission of the TB, the first UE may still send the SCI, and the SCI may still indicate the first PDB. In this case, the first PDB is, for example, a PDB 2. For example, the SCI is sent in a slot t3, and the PDB 2 may be less than the PDB 1, for example, PDB 2=PDB 0-(t3-t1).

Optionally, in S201, in addition to sending the first information, the first UE further sends the first data. Alternatively, the first UE may send the first data after S201. For example, the first data may also be sent on the first resource, or may be sent on another resource. The first data may be initially transmitted or retransmitted. If the second UE is a receiving end of the first data, the second UE may receive the first data; or if the second UE is not a receiving end of the first data, the second UE may not receive the first data. For example, the first UE may send the side control information, the side control information is, for example, the SCI, and the SCI includes, for example, first-stage SCI (SCI 1) and/or second-stage SCI (SCI 2). The side control information may be used to schedule the first data. For example, the side control information may further include an identifier of the receiving end of the first data. If the second UE determines that the identifier of the receiving end included in the side control information is the same as an identifier of the second UE, it indicates that the second UE is the receiving end of the first data. If the second UE determines that the identifier of the receiving end included in the side control information is different from an identifier of the second UE, it indicates that the second UE is not the receiving end of the first data. Optionally, the first information may be included in the side control information.

In addition, the first information may indicate the first PDB in different manners.

In an optional implementation in which the first information indicates the first PDB, the first information may indicate a proportion. For example, the first information includes proportion information, and the proportion information indicates the proportion. The proportion is a proportion of the first PDB to the PDB of the first data, or a proportion of the first PDB to the remaining PDB of the first data. For example, a first field is added to the side control information, and is used to carry the proportion information.

For example, a transmitting end (the first UE) of the first information may determine the first PDB, and determine a corresponding PDB based on a priority of a service to which the first data belongs. For example, if the first PDB is represented as y, and the proportion information is represented by x, the proportion information x is , where the PDB is the PDB of the first data.

A receiving end (for example, the second UE) of the first information may determine, based on the side control information, the first information and the priority of the service to which the first data belongs. For example, it is determined that the proportion information included in the first information is x, and the priority of the service to which the first data belongs is a priority 1. In addition, the second UE can determine the PDB of the first data based on the priority of the service to which the first data belongs. Therefore, the second UE can determine the first PDB. For example, the first PDB is x×PDB, where the PDB is the PDB of the first data.

In another optional implementation in which the first information indicates the first PDB, the first information may indicate a range to which a proportion belongs. For example, the first information includes an identifier or a sequence number of the range. The proportion is a proportion of the first PDB to the PDB of the first data, or a proportion of the first PDB to the remaining PDB of the first data. For example, a first field is added to the side control information, and is used to carry the first information. For descriptions of the PDB corresponding to the data, refer to the foregoing descriptions. For example, the proportion may be divided into a plurality of ranges, and one range includes at least one proportion. For example, a division manner is: 0 to 10% (excluding 10%) is a range, 10% to 20% (including 10% and excluding 20%) is another range, and the rest may be deduced by analogy. Optionally, the first UE may divide the range, and notify another UE (for example, the second UE) of a division result; another UE (for example, the second UE, or another UE other than the first UE and the second UE) may divide the range, and notify the first UE, the second UE, and/or the like of a division result; the range may be predefined by using a protocol; or a network device may divide the range, and notify the UE of a division result (for example, notifying the UE in a broadcast or unicast manner). A value of the PDB of the data may be small or may be large, and in this case, a value of the first PDB may also be small or large. In this case, if the first PDB is directly indicated, a large quantity of bits (bits) may be needed. However, indicating the range to which the proportion belongs can reduce a quantity of bits occupied by the first information, to reduce transmission overheads.

For example, a transmitting end (the first UE) of the first data may determine the first PDB, and determine a corresponding PDB based on a priority of a service to which the first data belongs. For example, if the first PDB is represented as y, and the proportion is represented by x, the proportion x is , where the PDB is the PDB of the first data. The first UE may determine a range to which x belongs, and indicate the range by using the first information.

A receiving end (for example, the second UE) of the first information may determine, based on the side control information, the first information and the priority of the service to which the first data belongs. For example, it is determined that the range indicated by the first information is a range 1, and the priority of the service to which the first data belongs is a priority 1. In addition, the second UE can determine the PDB of the first data based on the priority of the service to which the first data belongs. Therefore, the second UE can determine a range to which the first PDB belongs. For example, if the range 1 indicated by the first information is 0 to 10%, the first PDB belongs to 0 to 0.1 ×PDB, where the PDB is the PDB of the first data. In this manner, the receiving end may not be able to determine the specific value of the first PDB. However, if a range division granularity is fine enough, the first PDB determined by the receiving end may be infinitely close to the first PDB indicated by the transmitting end. Alternatively, in this manner, the receiving end may use, as the value of the first PDB, a maximum value, a minimum value, an intermediate value, an average value, or the like in the determined range to which the first PDB belongs.

In still another optional implementation in which the first information indicates the first PDB, the first information may include the first PDB. It may be understood as that the first information includes a specific value of the first PDB. In this manner, the first information may directly include the first PDB, a receiving end (for example, the second UE) of the first information does not need to perform another processing process, and the first PDB can be determined based on the first information. Therefore, implementation of the receiving end can be simplified. Optionally, the first information may include a first field, and the first field may include the first PDB. For example, the first field includes n bits, and the n bits may indicate the first PDB. A value range that can be indicated by the n bits is 0 to 2ⁿ - 2, where for example, a unit is millisecond (ms), a slot (slot), or an orthogonal frequency division multiplexing (orthogonal frequency division multiplexing, OFDM) symbol, and n is a positive integer. For example, a value of n may be determined based on a value range of the PDB. For example, if a maximum value of the PDB may be equal to 500, n may be 9. In this case, regardless of the value of the first PDB, the n bits can indicate the specific value of the first PDB. Alternatively, in consideration of transmission overheads, 2ⁿ may be less than a maximum value of the PDB. For example, if the maximum value of the PDB may be equal to 500, n may be 7, 8, or the like. If 2ⁿ is less than the maximum value of the PDB, a value of the n bits may be a first value when the first PDB is greater than or equal to 2ⁿ-1; or if the first PDB is less than 2ⁿ-1, the value of the n bits may be the specific value of the first PDB. It may be understood as that, if the value of the n bits included in the first information is the first value, it indicates that the first PDB is greater than or equal to 2ⁿ 1; or if the value of the n bits included in the first information is not the first value, the value of the n bits is the specific value of the first PDB. Optionally, the first value is, for example, a value of the n bits when each of the n bits is " 1 ", or a value of the n bits when each of the n bits is "0", or may be another value of the n bits.

In yet another optional implementation in which the first information indicates the first PDB, the first information may indicate a range to which the first PDB belongs. For example, the first information includes an identifier or a sequence number of the range. For example, a first field is added to the side control information, and is used to carry the first information. For descriptions of the PDB corresponding to the data, refer to the foregoing descriptions. For example, the PDB of the data may be divided into a plurality of ranges, and one range includes at least one PDB. For example, a division manner is: 0 to 10 (excluding 10) is a range, 10 to 20 (including 10 and excluding 20) is another range, and the rest may be deduced by analogy. Optionally, the first UE may divide the range, and notify another UE (for example, the second UE) of a division result; another UE (for example, the second UE, or another UE other than the first UE and the second UE) may divide the range, and notify the first UE, the second UE, and/or the like of a division result; the range may be predefined by using the protocol; or the network device may divide the range, and notify the UE of a division result (for example, notifying the UE in a broadcast or unicast manner). A value of the PDB of the data may be small or may be large, and in this case, a value of the first PDB may also be small or large. In this case, if the first PDB is directly indicated, a large quantity of bits may be needed. However, indicating the range to which the first PDB belongs can reduce a quantity of bits occupied by the first information, to reduce transmission overheads.

For example, a transmitting end (the first UE) of the first data may determine the first PDB. For example, the first PDB is represented as y. The first UE may determine a range to which y belongs, and indicate the range by using the first information.

A receiving end (for example, the second UE) of the first information may determine the first information based on the side control information, and determine the range to which the first PDB belongs accordingly. For example, the range indicated by the first information is a range 1. For example, if the range 1 is 10 to 20, the receiving end may determine that the first PDB belongs to 10 to 20. In this manner, the receiving end may not be able to determine the specific value of the first PDB. However, if a range division granularity is fine enough, the first PDB determined by the receiving end may be infinitely close to the first PDB indicated by the transmitting end. Alternatively, in this manner, the receiving end may use, as the value of the first PDB, a maximum value, a minimum value, an intermediate value, an average value, or the like in the determined range to which the first PDB belongs.

S202: If the first reserved resource and a second reserved resource have an intersection in each of time domain and frequency domain, and a priority of the first data is the same as a priority of second data, the second UE reselects a resource when a first condition is met.

The second reserved resource is a resource reserved by the second UE for the second data. Optionally, the second UE may further send second information on a second resource, where the second information may indicate the second reserved resource and a second PDB, and the second PDB may be determined by the second UE based on a PDB of the second data and sending time of the second information. For content such as implementations of the second PDB and the second information, refer to related descriptions of the content such as the first PDB and the first information in S201. Optionally, the second UE may further send the second data. For example, the second data may also be sent on the second resource, or may be sent on another resource.

For example, the first UE can receive the second information. In addition, if the first UE is a receiving end of the second data, the first UE may receive the second data; or if the first UE is not a receiving end of the second data, the first UE may not receive the second data. For details, refer to the foregoing related descriptions. The first UE may also determine whether to reselect a resource. A determining process of the first UE is similar to a determining process of the second UE. Therefore, the second UE is used as an example in this specification.

If the priority of the first data is different from the priority of the second data, the second UE may determine, based on the priorities, whether to reselect a resource, and S202 does not need to be performed. For example, if the priority of the first data is higher than the priority of the second data, the second UE may reselect a resource; or if the priority of the first data is lower than the priority of the second data, the second UE may not reselect a resource, but occupy the second reserved resource. In this case, the first UE may reselect a resource. It may be understood as that if the priority of the first data is different from the priority of the second data, whether to reselect a resource may not be determined in the manner in this embodiment of this application. In this embodiment of this application, a case in which the priority of the first data is the same as the priority of the second data is mainly considered.

In this embodiment of this application, it is considered that, although priorities of data transmitted by the two UEs are the same, importance degrees of data transmitted by the two UEs on a conflicting reserved resource may still be different. For example, FIG. 4 is a diagram in which a first UE and a second UE reserve a same resource R3. For example, the first UE has failed to perform initial transmission of a TB 1 before a slot t2, performs first retransmission of the TB 1 on a resource R2 in the slot t2, and plans to perform second retransmission of the TB 1 on the resource R3 in a slot r. The second UE has just performed first initial transmission of a TB 2 on a resource R1 in a slot t1, and the second UE plans to perform first retransmission of the TB 2 on the resource R3 in the slot r. In this case, a remaining PDB of the TB 2 of the second UE (for example, determined based on a PDB of the TB 2 and sending time of SCI used to schedule the initial transmission of the TB 2) may be greater than a remaining PDB of the TB 1 of the first UE (for example, determined based on a PDB of the TB 1 and sending time of SCI used to schedule the second retransmission of the TB 1). Compared with the first UE, the second UE has more remaining time, and even if the second UE releases the resource R3, it is easier to select a proper resource. Therefore, this embodiment of this application provides a resource preemption manner for data with same priorities. To be specific, whether to reselect a resource may be determined based on the first condition.

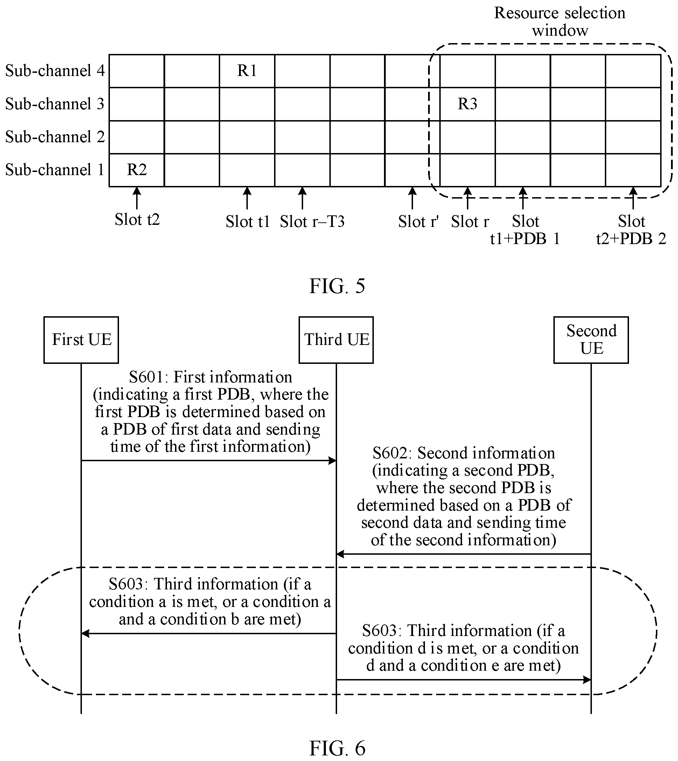

If the first reserved resource and the second reserved resource have an intersection in each of time domain and frequency domain, it indicates that resources reserved by the two UEs conflict. If the two UEs both use the reserved resources, a resource conflict may occur, and consequently, a data sending process of one UE or data sending processes of the two UEs may fail. In this case, the first UE and/or the second UE may determine whether to reselect a resource, to reduce a resource conflict probability. For example, the second UE may perform preemption detection before first time. It may be understood as that the second UE may perform S202 before the first time. Refer to FIG. 5. The first time is, for example, a slot r' in FIG. 5. In addition, FIG. 5 further shows a time domain position of the second reserved resource (both the first reserved resource and the second reserved resource are R3), for example, a slot r. Optionally, duration between the first time and the slot r is greater than or equal to T3, a unit of T3 is, for example, a slot, and T3 represents maximum duration needed for allowing the second UE to complete resource selection. In FIG. 5, R1 represents the first resource used to perform transmission of the first information and/or the first data, and R2 represents the second resource used to perform transmission of the second information and/or the second data. Optionally, when the first condition is met, the second UE may ignore the second reserved resource. It may be understood as that if the first condition is met, the second UE may give up the second reserved resource, and reserve the second reserved resource (or the first reserved resource) for the first UE to use, and the second UE reselects a resource as a reserved resource. Optionally, if the first condition is met, a physical layer of the second UE may send, to a higher layer (for example, an RRC layer or another protocol layer) of the second UE, an indication indicating that the second reserved resource is preempted, so that the higher layer of the second UE determines no longer to use the second reserved resource, and the physical layer of the second UE no longer uses the second reserved resource to perform data transmission.

Optionally, the first condition may include one or more of a condition 1 to a condition 4. The following describes these conditions.

The condition 1 includes: A transmission deadline of the second data is later than a transmission deadline of the first data. Optionally, the transmission deadline of the second data may be determined based on the second PDB and the sending time of the second information. For example, the transmission deadline of the second data is a sum of the sending time of the second information and the second PDB, or it is understood as that the transmission deadline of the second data is obtained by adding duration of the second PDB to the sending time of the second information. The transmission deadline of the first data may be determined based on the first PDB and the receiving time of the first information. For example, the transmission deadline of the first data is a sum of the receiving time of the first information and the first PDB, or it is understood as that the transmission deadline of the first data is obtained by adding duration of the first PDB to the receiving time of the first information. For example, in FIG. 5, the transmission deadline of the first data is slot t1+PDB 1, and the transmission deadline of the second data is slot t2+PDB 2. It can be learned that the transmission deadline of the second data is later than the transmission deadline of the first data.

The condition 1 indicates that, compared with the first data, the second data has more transmission time. Therefore, there are more resources for the second UE to select. Even if the second UE gives up the second reserved resource, there is a high probability that the second UE can reselect a proper resource. In this case, the second UE may give up the second reserved resource and reselect a resource, and the first UE may occupy the first reserved resource for transmission.

The condition 2 includes: A difference between a transmission deadline of the second data and a transmission deadline of the first data is greater than a first threshold. Optionally, the difference may be a difference obtained by subtracting the transmission deadline of the first data from the transmission deadline of the second data, or it is understood as that the transmission deadline of the second data is later than the transmission deadline of the first data. The first threshold may be configured by the first UE and notified to another UE (for example, the second UE), may be configured by the second UE and notified to another UE (for example, the first UE), may be determined through negotiation between UEs, may be predefined by using a protocol, or may be configured by a network device and notified to a UE. For example, if the first threshold is represented as δ_{t,1}, the transmission deadline of the second data is PDB 2+t2, and the transmission deadline of the first data is PDB 1+t1, the condition 2 may be represented as PDB 2+t2-(PDB 1+t1)≥δ_{t,1}. The first PDB is the PDB 1, the second PDB is the PDB 2, the sending time of the second information is t2, and the receiving time of the first information is t1. For t1, t2, and the like, refer to FIG. 5.

If the condition 2 is met, it indicates that remaining transmission time of the second data is sufficient. Therefore, there are more resources for the second UE to select. Even if the second UE gives up the second reserved resource, there is a high probability that the second UE can reselect a proper resource. In addition, if the condition 2 is met, it indicates that, compared with the remaining transmission time of the second data, remaining transmission time of the first data is shorter. A service with a higher priority or a higher urgency may have shorter transmission time. Therefore, when the condition 2 is met, it may indicate that the service to which the first data belongs is a more important or urgent service, and transmission of the first data should be performed as soon as possible. In this case, the second UE may give up the second reserved resource and reselect a resource, and the first UE may occupy the first reserved resource for transmission.

In addition, if the remaining transmission time of the first data is shorter, it may indicate that the first data (or the service to which the first data belongs) is more important or more urgent. According to the solution in this embodiment of this application, transmission of a service that is more important or more urgent can be preferentially performed, and a transmission delay of this type of service is reduced.

The condition 3 includes: A received power (or received signal quality) corresponding to the first resource is greater than a second threshold. The first resource is a resource used by the second UE to receive the first information and/or the first data. It may be understood as that the second UE may measure a received power of a signal from another UE. If a received power obtained by measuring a signal from a specific UE (for example, the first information and/or the first data from the first UE) is greater than the second threshold, it indicates that the UE may cause interference to transmission of the second UE. If a reserved resource of the UE conflicts with the reserved resource of the second UE, the second UE may perform interference avoidance. For example, the second UE may give up the reserved resource. For example, the second threshold is Th(prio_{RX}, prio_{TX}), where prio_{RX} represents the priority of the first data, and prio_{TX} represents the priority of the second data. A parameter corresponding to the second threshold may be a reference signal received power (reference signal received power, RSRP), reference signal received quality (reference signal received quality, RSRQ), a signal to interference plus noise ratio (signal to interference plus noise ratio, SINR), or the like.

The condition 4 includes: Duration of a second resource selection window is greater than a third threshold. The condition 4 indicates that the second UE may select a resource in a long resource selection window, and indicates that there are sufficient candidate resources for the second data, so that a case in which the second UE cannot select a proper resource after giving up the second reserved resource is avoided as much as possible. Even if the second UE gives up the second reserved resource, there is a high probability that the second UE can reselect a proper resource. In this case, the second UE may give up the second reserved resource and reselect a resource, and the first UE may occupy the first reserved resource for transmission.

The second resource selection window is a resource selection window used by the second UE to reselect a resource. For example, the duration of the second resource selection window may be determined based on the transmission deadline of the second data and time at which the second UE starts to reselect a resource, or may be determined based on the PDB of the second data and time at which the second UE starts to reselect a resource. For example, refer to FIG. 5. If r' represents the time at which the second UE starts to reselect a resource, start time of the second resource selection window is r'. In addition, end time of the second resource selection window may be earlier than or equal to PDB 2+t2. In other words, the duration of the second resource selection window is less than or equal to PDB 2+t2-r', and the second UE may select a resource in the second resource selection window. For example, if the third threshold is represented as δ_{t,2}, and the end time of the second resource selection window is PDB 2+t2, the condition 4 may be represented as PDB 2+t2-r'≥δ_{t,2}.

For example, after reselecting a resource, the second UE redetermines a reserved resource, for example, a third reserved resource. In this case, the second UE may send data on the third reserved resource, and the first UE may continue to occupy the first reserved resource to send data.

According to the technical solutions in embodiments of this application, even if priorities of data are the same, resource preemption can be implemented, to reduce a resource conflict probability.

In the embodiment shown in FIG. 2, the device in which the resource conflict occurs determines, by itself, whether to reselect a resource or preempt the resource. In addition, in embodiments of this application, it is considered that a third-party device may determine whether the resource conflict occurs. FIG. 6 is a flowchart of another communication method according to an embodiment of this application. In the method, a third-party device may determine whether a resource conflict occurs. In this embodiment of this application, the third-party device is, for example, a third UE. The third UE may be any UE other than a first UE and a second UE, for example, provided that the third UE can receive information from the first UE and information from the second UE. Alternatively, the third UE may be a predetermined UE, for example, a preset UE dedicated to deciding whether another UE has a resource conflict with a UE.

S601: The first UE sends first information on a first resource UE. Correspondingly, the third UE receives the first information on the first resource.

The first information may indicate a first reserved resource and a first PDB. The first reserved resource is a transmission resource reserved by the first UE for first data. The first PDB may be determined by the first UE based on a PDB of the first data and sending time of the first information. For content such as implementations of the first PDB and the first information, refer to related descriptions of S201 in the embodiment shown in FIG. 2.

Optionally, in S601, in addition to sending the first information, the first UE further sends the first data. Alternatively, the first UE may send the first data after S601. For example, the first data may also be sent on the first resource, or may be sent on another resource. The first data may be initially transmitted or retransmitted. If the third UE is a receiving end of the first data, the third UE may receive the first data; or if the third UE is not a receiving end of the first data, the third UE may not receive the first data. For more content, refer to S201 in the embodiment shown in FIG. 2.

S602: The second UE sends second information on a second resource. Correspondingly, the third UE receives the second information on the second resource. S602 may be performed before S601, S602 may be performed after S601, or S602 and S601 may be simultaneously performed.

The second information may indicate a second reserved resource and a second PDB. The second reserved resource is a transmission resource reserved by the second UE for second data. The second PDB may be determined by the second UE based on a PDB of the second data and sending time of the second information. The first reserved resource and the second reserved resource have an intersection in each of time domain and frequency domain, and a priority of the first data is the same as a priority of the second data. It may be understood as that if the priority of the first data is different from the priority of the second data, whether a resource conflict occurs may not be determined in a manner in this embodiment of this application (for the determining manner in this case, refer to descriptions of the embodiment shown in FIG. 2). In this embodiment of this application, a case in which the priority of the first data is the same as the priority of the second data is mainly considered. In addition, for content such as implementations of the second PDB and the second information, refer to related descriptions of S202 in the embodiment shown in FIG. 2.

Optionally, in S602, in addition to sending the second information, the second UE further sends the second data. Alternatively, the second UE may send the second data after S602. For example, the second data may also be sent on the second resource, or may be sent on another resource. The second data may be initially transmitted data or retransmitted data. If the third UE is a receiving end of the second data, the third UE may receive the second data; or if the third UE is not a receiving end of the second data, the third UE may not receive the second data. For more content, refer to S201 in the embodiment shown in FIG. 2.

S603: The third UE sends third information to a fourth UE on a fourth feedback channel. Correspondingly, the fourth UE receives the third information from the third UE on the fourth feedback channel. The fourth UE may be the first UE, and the fourth feedback channel is a feedback channel associated with the first data or a feedback channel associated with the first reserved resource; or the fourth UE may be the second UE, and the fourth feedback channel is a feedback channel associated with the second data or a feedback channel associated with the second reserved resource. In addition, the third information may indicate the resource conflict. Optionally, in the first UE and the second UE, a UE that receives the third information may perform corresponding processing based on an indication of the third information, and does not perform another determining mechanism. For example, the UE that receives the third information may reselect a resource, and give up a reserved resource of the UE; and a UE that does not receive the third information may not reselect a resource, but continue to use (or understood as preempting) the reserved resource of the UE. Alternatively, in the first UE and the second UE, whether a UE that receives the third information reselects a resource depends on implementation of the UE. For example, the UE that receives the third information may reselect a resource, or may not reselect a resource.

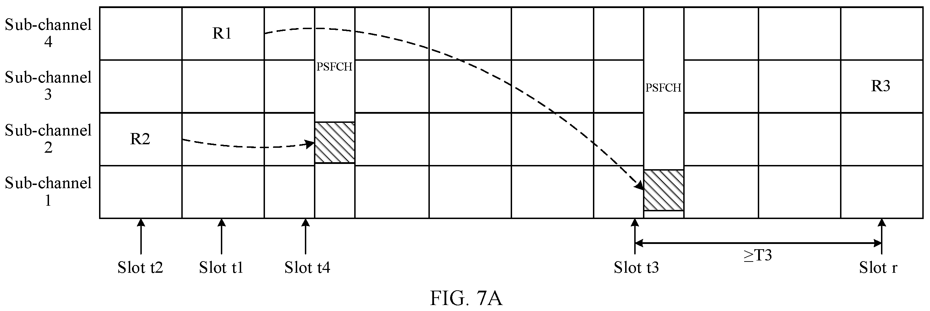

A feedback channel associated with data may also be understood as a feedback channel associated with a resource used to perform transmission of the data. For example, the feedback channel associated with the first data may be understood as a feedback channel associated with the first resource, and the first resource is a resource used to perform transmission of the first information and/or the first data. The feedback channel associated with the second data may be understood as a feedback channel associated with the second resource, and the second resource is a resource used to perform transmission of the second information and/or the second data. A feedback channel associated with data or a resource used to perform data transmission may be used to perform transmission of feedback information of the data, and the feedback information may indicate whether the data is successfully received. For example, the feedback channel is a physical sidelink feedback channel (physical sidelink feedback channel, PSFCH), and the feedback information is hybrid automatic repeat request (hybrid automatic repeat request, HARQ) information, for example, an acknowledgment (ACK) or a negative acknowledgment (NACK). In this embodiment of this application, in addition to being used to perform transmission of the feedback information, the feedback channel may be further used to perform transmission of information indicating a resource conflict (for example, the third information). Refer to FIG. 7A. A PSFCH in a slot t4 is the feedback channel associated with the second data, may be used to perform transmission of feedback information of the second data (for example, the transmission of the feedback information of the second data may be performed by using a physical resource block (physical resource block, PRB) represented by "\" in the PSFCH in FIG. 7A), and may be used to perform transmission of information indicating the resource conflict to the second UE. A PSFCH in a slot t3 is the feedback channel associated with the first data, may be used to perform transmission of feedback information of the first data (for example, the transmission of the feedback information of the first data may be performed by using a PRB represented by "\" in the PSFCH in FIG. 7A), and may be used to perform transmission of information indicating the resource conflict to the first UE. For example, the information indicating the resource conflict and the feedback information may occupy the feedback channel in a time division manner, a frequency division manner, a code division manner, or the like, so that both transmission of the feedback information and transmission of the information indicating the resource conflict can be performed.

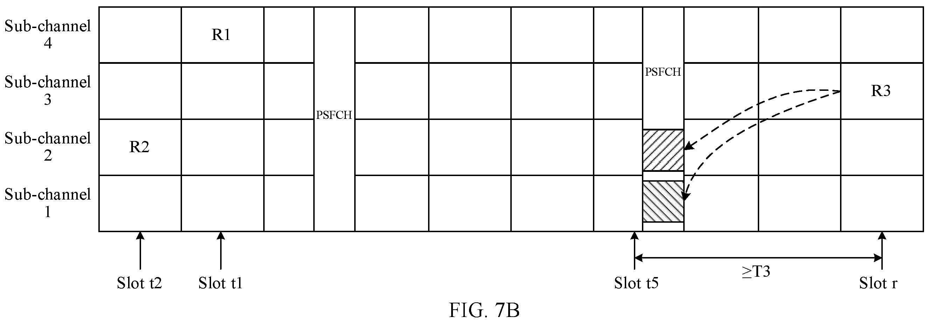

A feedback channel associated with a reserved resource may not be used to perform transmission of feedback information. For example, the feedback channel is dedicated to performing transmission of information indicating a resource conflict (for example, the third information). In addition, transmission of the feedback information may be performed through another feedback channel (for example, a feedback channel associated with data). For example, for the first UE, there may be a feedback channel used to receive the third information, or there may be a feedback channel used to receive feedback information of data sent by the first UE. The two feedback channels may coexist. The second UE is also similar. For example, the feedback channel associated with the first reserved resource is dedicated to performing transmission of the information indicating the resource conflict to the first UE, and the feedback channel associated with the second reserved resource is dedicated to performing transmission of the information indicating the resource conflict to the second UE. Because the first reserved resource and the second reserved resource have an intersection in each of time domain and frequency domain, optionally, the feedback channel associated with the first reserved resource and the feedback channel associated with the second reserved resource may have an intersection in time domain, but may not overlap in frequency domain and/or code domain, to perform transmission of information that is sent to different UEs and that indicates the resource conflict. Refer to FIG. 7B. A PSFCH in a slot t5 is the feedback channel associated with the first reserved resource, and is also the feedback channel associated with the second reserved resource. In other words, in FIG. 7B, an example in which the two feedback channels completely overlap in time domain is used. The two feedback channels may be used to perform transmission of information indicating the resource conflict. For example, the feedback channel associated with the first reserved resource may be used to perform transmission of the information indicating the resource conflict to the first UE (for example, the transmission of the information may be performed by using a PRB represented by "\" in the PSFCH in FIG. 7B). The feedback channel associated with the second reserved resource may be used to perform transmission of the information indicating the resource conflict to the second UE (for example, the transmission of the information may be performed by using a PRB represented by "/" in the PSFCH in FIG. 7B).

For example, the third UE may determine the third information based on the first information and the second information, in other words, determine a specific UE to which the resource conflict is indicated.

The third UE determines the third information based on the first information and the second information. For example, in an optional manner, if a condition a is met, the third UE determines to indicate the resource conflict to the first UE, or determines that the fourth UE is the first UE; or if a condition a and a condition b are met, the third UE determines to indicate the resource conflict to the first UE, or determines that the fourth UE is the first UE.

The condition a includes: First duration is greater than second duration.

The first duration may be determined based on the feedback channel associated with the first data or the feedback channel associated with the first reserved resource and the first PDB. The first duration may be duration of a resource selection window used by the first UE to reselect a resource. For example, the first duration is maximum duration of the resource selection window used by the first UE to reselect a resource. For example, start time of the first duration is a time domain position of the feedback channel associated with the first data or a time domain position of the feedback channel associated with the first reserved resource, end time of the first duration is a transmission deadline of the first data, and the transmission deadline of the first data may be determined based on the first PDB and receiving time of the first information. For details, refer to descriptions of the embodiment shown in FIG. 2.

The second duration may be determined based on the feedback channel associated with the second data or the feedback channel associated with the second reserved resource and the second PDB. The second duration is, for example, duration of a resource selection window used by the second UE to reselect a resource. For example, start time of the second duration is a time domain position of the feedback channel associated with the second data or a time domain position of the feedback channel associated with the second reserved resource, end time of the second duration is a transmission deadline of the second data, and the transmission deadline of the second data may be determined based on the second PDB and receiving time of the second information. For details, refer to the descriptions of the embodiment shown in FIG. 2.

The condition a may indicate that, compared with the second UE, the first UE has more candidate resources, and a probability of selecting a proper resource is higher.

For example, the second duration may be determined based on the second PDB and the time domain position of the feedback channel associated with the second data, and the first duration may be determined based on the first PDB and the time domain position of the feedback channel associated with the first data. Refer to FIG. 7A. The condition a may be represented as PDB 1+t1-n3>PDB 2+t2-n4. The PDB 1 represents the first PDB, t1 represents the receiving time of the first information, n3 represents the time domain position of the feedback channel associated with the first data, and PDB 1+t1-n3 represents the first duration. The PDB 2 represents the second PDB, t2 represents the receiving time of the second information, n4 represents the time domain position of the feedback channel associated with the second data, and PDB 2+t2-n4 represents the second duration.

For another example, the second duration may be determined based on the second PDB and the time domain position of the feedback channel associated with the second reserved resource, and the first duration may be determined based on the first PDB and the time domain position of the feedback channel associated with the first reserved resource. Refer to FIG. 7B. The condition a may be represented as PDB 1+t1-n5>PDB 2+t2-n5. The PDB 1 represents the first PDB, t1 represents the receiving time of the first information, n5 represents the time domain position of the feedback channel associated with the first reserved resource, and also represents the time domain position of the feedback channel associated with the second reserved resource, and PDB 1+t1-n5 represents the first duration. The PDB 2 represents the second PDB, t2 represents the receiving time of the second information, and PDB 2+t2-n5 represents the second duration.

The condition b includes: Third duration is greater than or equal to a fourth threshold, and the third duration is, for example, duration used by the first UE to reselect a resource. The third duration may be determined based on the time domain position of the feedback channel associated with the first data or the time domain position of the feedback channel associated with the first reserved resource and a time domain position of the first reserved resource. For example, the third duration is duration between the time domain position of the feedback channel associated with the first data or the time domain position of the feedback channel associated with the first reserved resource and the time domain position of the first reserved resource. Alternatively, it is understood as that start time of the third duration is the time domain position of the feedback channel associated with the first data or the time domain position of the feedback channel associated with the first reserved resource, and end time of the third duration is the time domain position of the first reserved resource. The condition b may indicate that the first UE has sufficient time to complete the resource reselection.

For example, the start time of the third duration is the time domain position of the feedback channel associated with the first data. For example, if the feedback channel is the PSFCH shown in the slot t3 in FIG. 7A, the third duration may be r-t3 in FIG. 7A. Alternatively, the start time of the third duration is the time domain position of the feedback channel associated with the first reserved resource. For example, if the feedback channel is the PSFCH shown in the slot t5 in FIG. 7B, the third duration may be r-t5 in FIG. 7A. Optionally, the fourth threshold is, for example, T3, a unit of T3 is, for example, a slot, and T3 represents maximum duration needed for allowing the first UE to complete the resource selection.

Optionally, if the third UE is the receiving end of the first data or the receiving end of the second data, the third UE may further determine the third information based on the first information and the second information with reference to a condition c. For example, if the condition a and the condition c are met, the third UE determines to indicate the resource conflict to the first UE, or determines that the fourth UE is the first UE; or if the condition a, the condition b, and the condition c are met, the third UE determines to indicate the resource conflict to the first UE, or determines that the fourth UE is the first UE.

The condition c includes: If the third UE receives the first data on the first reserved resource (in other words, the third UE is the receiving end of the first data), a second received power is greater than a fifth threshold, or a second received power is greater than or equal to a value determined based on a first received power and a sixth threshold; or if the third UE receives the second data on the second reserved resource (in other words, the third UE is the receiving end of the second data), a first received power is greater than a fifth threshold, or a first received power is greater than or equal to a value determined based on a second received power and a sixth threshold.

The second received power is a received power obtained by the third UE through measurement on the second resource, the first received power is a received power obtained by the third UE through measurement on the first resource, the second resource is a resource used to perform transmission of the second information and/or the second data, and the first resource is a resource used to perform transmission of the first information and/or the second data. The fifth threshold is, for example, Th(prio₂, prio₁). The sixth threshold may be represented as deltaₜₕ. The sixth threshold may be configured by the first UE and notified to another UE (for example, the second UE), may be configured by the second UE and notified to another UE (for example, the first UE), may be determined through negotiation between UEs, may be predefined by using a protocol, or may be configured by a network device and notified to the UE. The received power is represented by, for example, an RSRP, RSRQ, or a SINR. The value determined based on the first received power and the sixth threshold is, for example, a sum of the first received power and the sixth threshold; and the value determined based on the second received power and the sixth threshold is, for example, a sum of the second received power and the sixth threshold. For example, if the received power obtained by the third UE through measurement on the first resource is an RSRP 1, and the received power obtained by the third UE through measurement on the second resource is an RSRP 2, the condition c may be represented as: If the third UE receives the first data on the first reserved resource, RSRP 2≥RSRP 1+deltaₜₕ, or RSRP 2>Th(prio_{z}, prio₁); or if the third UE receives the second data on the second reserved resource, RSRP 1≥RSRP 2+deltaₜₕ, or RSRP 1>Th(prio₂, prio₁).

The condition c may be understood as: If the third UE is to receive the first data on the first reserved data, and interference caused by the second UE is large (for example, RSRP 2≥RSRP 1+deltaₜₕ, or RSRP 2>Th(prio₂, prio₁)), the third UE may indicate the first UE to reselect a resource to send the first data, so as to reduce the interference; or in this case, the third UE may indicate the second UE to reselect a resource. However, if the condition c is in combination with the condition a or the condition a and the condition b, the third UE may indicate the first UE to reselect a resource.

Alternatively, if the third UE is to receive the second data on the second reserved data, and interference caused by the first UE is large (for example, RSRP 2≥RSRP 1+deltaₜₕ, or RSRP 2>Th(prio₂, prio₁)), the third UE may indicate the first UE to reselect a resource, so as to reduce the interference to receiving the second data; or in this case, the third UE may indicate the second UE to reselect a resource to send the second data. However, if the condition c is in combination with the condition a or the condition a and the condition b, the third UE may indicate the first UE to reselect a resource.

Optionally, if the third UE is neither the receiving end of the first data nor the receiving end of the second data, the third UE may not need to determine the condition c, but only needs to consider the condition a or the condition a and the condition b. Alternatively, if the third UE is both the receiving end of the first data and the receiving end of the second data, in this case, it is required that both the two sub-conditions included in the condition c be met. However, the two sub-conditions are mutually exclusive. Therefore, if the third UE is both the receiving end of the first data and the receiving end of the second data, the third UE may also not need to determine the condition c, but only needs to consider the condition a or the condition a and the condition b.

The third UE determines the third information based on the first information and the second information. For example, in another optional manner, if a condition d is met, a third UE determines to indicate the resource conflict to the second UE, or determines that the fourth UE is the second UE; or if a condition d and a condition e are met, a third UE determines to indicate the resource conflict to the second UE, or determines that the fourth UE is the second UE.

The condition d includes: Second duration is greater than first duration. For descriptions of content such as the first duration and the second duration, refer to the foregoing descriptions. The condition d may indicate that, compared with the first UE, the second UE has more candidate resources, and a probability of selecting a proper resource after the second reserved resource is given up is higher.

For example, the second duration may be determined based on the second PDB and a time domain position of the feedback channel associated with the second data, and the first duration may be determined based on the first PDB and a time domain position of the feedback channel associated with the first data. Refer to FIG. 7A. The condition d may be represented as PDB 2+t2-n4>PDB 1+t1-n3. The PDB 1 represents the first PDB, t1 represents receiving time of the first information, n3 represents the time domain position of the feedback channel associated with the first data, and PDB 1+t1-n3 represents the first duration. The PDB 2 represents the second PDB, t2 represents receiving time of the second information, n4 represents the time domain position of the feedback channel associated with the second data, and PDB 2+t2-n4 represents the second duration.

For another example, the second duration may be determined based on the second PDB and a time domain position of the feedback channel associated with the second reserved resource, and the first duration may be determined based on the first PDB and a time domain position of the feedback channel associated with the first reserved resource. Refer to FIG. 7B. The condition d may be represented as PDB 2+t2-n5>PDB 1+t1-n5. The PDB 1 represents the first PDB, t1 represents receiving time of the first information, n5 represents the time domain position of the feedback channel associated with the first reserved resource, and also represents the time domain position of the feedback channel associated with the second reserved resource, and PDB 1+t1-n5 represents the first duration. The PDB 2 represents the second PDB, t2 represents receiving time of the second information, and PDB 2+t2-n5 represents the second duration.

The condition e includes: Fourth duration is greater than or equal to the fourth threshold, and the fourth duration is, for example, duration used by the second UE to reselect a resource. The fourth duration may be determined based on the time domain position of the feedback channel associated with the second data or the time domain position of the feedback channel associated with the second reserved resource and a time domain position of the second reserved resource. For example, start time of the fourth duration is the time domain position of the feedback channel associated with the second data or the time domain position of the feedback channel associated with the second reserved resource, and end time of the fourth duration is the time domain position of the second reserved resource. For example, the start time of the fourth duration is the time domain position of the feedback channel associated with the second data. For example, if the feedback channel is the PSFCH shown in the slot t4 in FIG. 7A, the fourth duration may be r-t4 in FIG. 7A. Alternatively, the start time of the fourth duration is the time domain position of the feedback channel associated with the second reserved resource. For example, if the feedback channel is the PSFCH shown in the slot t5 in FIG. 7B, the fourth duration may be r-t5 in FIG. 7A. For the fourth threshold, refer to the foregoing descriptions. The condition e may indicate that the second UE has sufficient time to complete the resource reselection.

Optionally, if the third UE is the receiving end of the first data or the receiving end of the second data, the third UE may further determine the third information based on the first information and the second information with reference to a condition c. For example, if the condition c and the condition d are met, the third UE determines to indicate the resource conflict to the second UE, or determines that the fourth UE is the second UE; or if the condition c, the condition d, and the condition e are met, the third UE determines to indicate the resource conflict to the second UE, or determines that the fourth UE is the second UE. For content of the condition c, refer to the foregoing descriptions.

The condition c may be understood as: If the third UE is to receive the first data on the first reserved data, and interference caused by the second UE is large (for example, RSRP 2≥RSRP 1+deltaₜₕ, or RSRP 2>Th(prio₂, prio₁)), the third UE may indicate the second UE to reselect a resource, so as to reduce the interference; or in this case, the third UE may indicate the first UE to reselect a resource to send the first data. However, if the condition c is in combination with the condition d or the condition and the condition e, the third UE may indicate the second UE to reselect a resource.

Alternatively, if the third UE is to receive the second data on the second reserved data, and interference caused by the first UE is large (for example, RSRP 2≥RSRP 1+deltaₜₕ, or RSRP 2>Th(prio₂, prio₁)), the third UE may indicate the second UE to reselect a resource to send the second data, so as to reduce the interference to receiving the second data; or in this case, the third UE may indicate the first UE to reselect a resource. However, if the condition c is in combination with the condition d or the condition and the condition e, the third UE may indicate the second UE to reselect a resource.

Optionally, if the third UE is neither the receiving end of the first data nor the receiving end of the second data, the third UE may not need to determine the condition c, but only needs to consider the condition d or the condition and the condition e. Alternatively, if the third UE is both the receiving end of the first data and the receiving end of the second data, in this case, it is required that both the two sub-conditions included in the condition c be met. However, the two sub-conditions are mutually exclusive. Therefore, if the third UE is both the receiving end of the first data and the receiving end of the second data, the third UE may also not need to determine the condition c, but only needs to consider the condition d or the condition and the condition e.

If the first UE receives the third information, the first UE may decide, by itself, whether to give up the first reserved resource and reselect a resource. For example, the first UE may reselect a resource, or may not give up the first reserved resource and may not reselect a resource. Alternatively, if the first UE receives the third information, the first UE may give up the first reserved resource, and reselect a resource for the first data. For example, a physical layer of the first UE may send, to a higher layer (for example, an RRC layer or another protocol layer) of the first UE, an indication indicating that the first reserved resource is preempted, so that the higher layer of the first UE determines no longer to use the first reserved resource, and the physical layer of the first UE no longer uses the first reserved resource to perform data transmission.

Alternatively, if the second UE receives the third information, the second UE may decide, by itself, whether to give up the second reserved resource and reselect a resource. For example, the second UE may reselect a resource, or may not give up the second reserved resource and may not reselect a resource. Alternatively, if the second UE receives the third information, the second UE may give up the second reserved resource, and reselect a resource for the second data. For example, a physical layer of the second UE may send, to a higher layer (for example, an RRC layer or another protocol layer) of the second UE, an indication indicating that the second reserved resource is preempted, so that the higher layer of the second UE determines no longer to use the second reserved resource, and the physical layer of the second UE no longer uses the second reserved resource to perform data transmission.

According to the technical solutions in embodiments of this application, even if priorities of data are the same, resource preemption can be implemented, to reduce a resource conflict probability. In addition, it can be learned from the foregoing embodiments that, a UE that performs data transmission or a third-party device may decide whether the UE that performs data transmission reselects a resource or preempts the resource, and implementations are flexible.

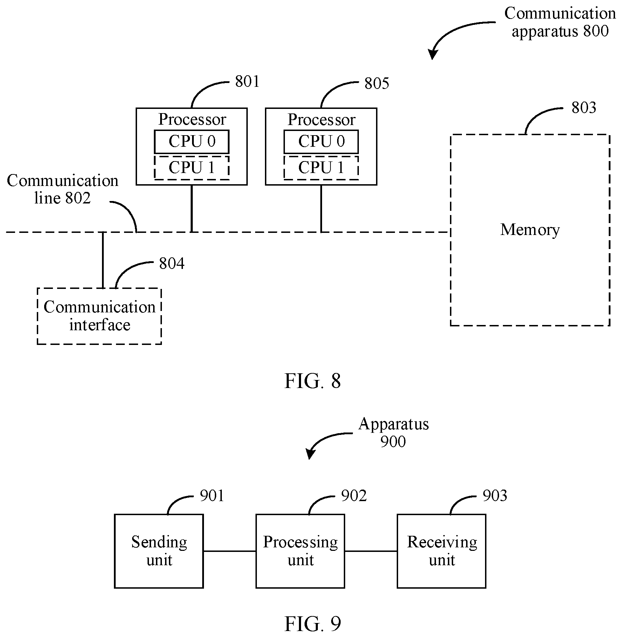

FIG. 8 is a diagram of a structure of a communication apparatus according to an embodiment of this application. The communication apparatus 800 may be the first UE or a circuit system of the first UE in the embodiment shown in FIG. 2 or FIG. 6, and is configured to implement the method corresponding to the first UE in the foregoing method embodiments. Alternatively, the communication apparatus 800 may be the second UE or a circuit system of the second UE in the embodiment shown in FIG. 2 or FIG. 6, and is configured to implement the method corresponding to the second UE in the foregoing method embodiments. For specific functions, refer to the descriptions of the foregoing method embodiments. Alternatively, the communication apparatus 800 may be the third UE or a circuit system of the third UE in the embodiment shown in FIG. 6, and is configured to implement the method corresponding to the third UE in the foregoing method embodiments. For specific functions, refer to the descriptions of the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 802 may include a path and transfers information between the foregoing components.

The communication interface 804 is configured to communicate, by using any apparatus such as a transceiver, with another device or a communication network, for example, an ethernet, a radio access network (radio access network, RAN), a wireless local area network (wireless local area networks, WLAN), or a wired access network.

The memory 803 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions in this application, and the processor 801 controls execution of the computer-executable instructions. The processor 801 is configured to execute the computer-executable instructions stored in the memory 803, to implement the steps performed by the first UE in the embodiment shown in FIG. 2 or FIG. 6, implement the steps performed by the second UE in the embodiment shown in FIG. 2 or FIG. 6, or implement the steps performed by the third UE in the embodiment shown in FIG. 6.

Optionally, the computer-executable instructions in this embodiment of this application may also be referred to as application program code. This is not specifically limited in this embodiment of this application.

In a specific implementation, in an embodiment, the processor 801 may include one or more CPUs, for example, a CPU 0 and a CPU 1 shown in FIG. 8.

In a specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the first UE, a chip of the second UE, or a chip of the third UE, the chip includes the processor 801 (which may further include the processor 805), the communication line 802, and the communication interface 804. Optionally, the chip may include the memory 803. Specifically, the communication interface 804 may be an input interface, a pin, a circuit, or the like. The memory 803 may be a register, a buffer, or the like. The processor 801 and the processor 805 may be a general-purpose CPU, a microprocessor, an ASIC, or one or more integrated circuits configured to control program execution of the communication method according to any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. For example, when each functional module is obtained through division based on each corresponding function, FIG. 9 is a diagram of an apparatus. The apparatus 900 may be the first UE, the second UE, or the third UE in the foregoing method embodiments, or a chip in the first UE, a chip in the second UE, or a chip in the third UE. The apparatus 900 includes a sending unit 901, a processing unit 902, and a receiving unit 903.

It should be understood that the apparatus 900 may be configured to implement the steps performed by the first UE, the second UE, or the third UE in the communication method in embodiments of this application. For related features, refer to either the embodiment shown in FIG. 2 or the embodiment shown in FIG. 6. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the first UE, the second UE, or the third UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE, the second UE, or the third UE according to any one of the foregoing method embodiments.

An embodiment of this application further provides a processing apparatus, including a processor and an interface. The processor is configured to perform the method performed by the first UE, the second UE, or the third UE according to any one of the foregoing method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be disposed in different parts of the terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or s logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first UE, the second UE, or the third UE may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A communication method, applied to a second terminal device, wherein the method comprises:
receiving first information from a first terminal device on a first resource, wherein the first information indicates a first reserved resource and a first packet delay budget PDB, the first reserved resource is a resource reserved by the first terminal device for first data, and the first PDB is determined by the first terminal device based on a PDB of the first data and sending time of the first information; and
if the first reserved resource and a second reserved resource have an intersection in each of time domain and frequency domain, and a priority of the first data is the same as a priority of second data, reselecting a resource for the second data when a transmission deadline of the second data meets a first condition, wherein the second reserved resource is a resource reserved by the second terminal device for the second data, and the transmission deadline of the second data is determined based on a PDB of the second data, wherein the first condition comprises: the transmission deadline of the second data is later than a transmission deadline of the first data, and the transmission deadline of the first data is determined based on the first PDB and receiving time of the first information.

2. The method according to claim 1, wherein the first condition further comprises one or more of the following:
a difference between the transmission deadline of the second data and the transmission deadline of the first data is greater than a first threshold;
a received power corresponding to the first resource is greater than a second threshold; or
duration of a second resource selection window is greater than a third threshold, wherein the second resource selection window is a resource selection window used by the second terminal device to reselect a resource for the second data.

3. The method according to claim 1 or 2, wherein the method further comprises:
sending, to a higher layer of the second terminal device, an indication indicating that the second reserved resource is preempted.

4. The method according to any one of claims 1 to 3, wherein the first information is comprised in side control information.

5. The method according to claim 4, wherein that the first information indicates the first PDB comprises:
the first information indicates a proportion of the first PDB to the PDB of the first data, wherein the PDB of the first data is associated with the priority of the first data;
the first information indicates a range to which a proportion of the first PDB to the PDB of the first data belongs, and the PDB of the first data is associated with the priority of the first data;
the first information indicates a range to which the first PDB belongs; or
the first information comprises the first PDB.

6. The method according to claim 5, wherein the first information comprises a first field, and the first field comprises the first PDB; and
if a value of the first field is a first value, it indicates that the first PDB is greater than or equal to 2ⁿ - 1, wherein n represents a quantity of bits occupied by the first field; or
if a value of the first field is not a first value, the value of the first field is the first PDB.

7. The method according to any one of claims 1 to 6, wherein the method further comprises:
sending second information, wherein the second information indicates the second reserved resource and a second PDB, and the second PDB is determined based on the PDB of the second data and sending time of the second information.

8. A communication method, applied to a third terminal device, wherein the method comprises:
receiving first information from a first terminal device on a first resource, and receiving second information from a second terminal device on a second resource, wherein the first information indicates a first reserved resource and a first PDB, the first reserved resource is a resource reserved by the first terminal device for first data, the first PDB is determined by the first terminal device based on a PDB of the first data and sending time of the first information, the second information indicates a second reserved resource and a second PDB, the second reserved resource is a resource reserved by the second terminal device for second data, and the second PDB is determined by the second terminal device based on a PDB of the second data and sending time of the second information; and
sending third information to a fourth terminal device on a fourth feedback channel, wherein the third information indicates a resource conflict, the third information is determined based on the first information and the second information, the first reserved resource and the second reserved resource have an intersection in each of time domain and frequency domain, and a priority of the first data is the same as a priority of the second data, wherein
if first duration is greater than second duration, the fourth terminal device is the first terminal device, and the fourth feedback channel is a feedback channel associated with the first data or a feedback channel associated with the first reserved resource; or if second duration is greater than first duration, the fourth terminal device is the second terminal device, and the fourth feedback channel is a feedback channel associated with the second data or a feedback channel associated with the second reserved resource, wherein the first duration is determined based on the feedback channel associated with the first data or the feedback channel associated with the first reserved resource and the first PDB, and the second duration is determined based on the feedback channel associated with the second data or the feedback channel associated with the second reserved resource and the second PDB.

9. The method according to claim 8, wherein
if the first duration is greater than the second duration, and third duration is greater than or equal to a fourth threshold, the fourth terminal device is the first terminal device, and the third duration is duration between a time domain position of the fourth feedback channel and a time domain position of the first reserved resource.

10. The method according to claim 8, wherein
if the second duration is greater than the first duration, and fourth duration is greater than or equal to a fourth threshold, the fourth terminal device is the second terminal device, and the fourth duration is duration between a time domain position of the fourth feedback channel and a time domain position of the second reserved resource.

11. The method according to claim 9 or 10, wherein
if the third terminal device receives the first data on the first reserved resource, and a second received power is greater than a fifth threshold, or a second received power is greater than a value determined based on a first received power and a sixth threshold, the fourth terminal device is the second terminal device or the first terminal device; or
if the third terminal device receives the second data on the second reserved resource, and a first received power is greater than a fifth threshold, or a first received power is greater than a value determined based on a second received power and a sixth threshold, the fourth terminal device is the second terminal device or the first terminal device, wherein
the second received power is a received power obtained by the third terminal device through measurement on the second resource, and the first received power is a received power obtained by the third terminal device through measurement on the first resource.

12. The method according to any one of claims 8 to 11, wherein the first information is comprised in side control information.

13. The method according to claim 12, wherein that the first information indicates the first PDB comprises:
the first information indicates a proportion of the first PDB to the PDB of the first data, wherein the PDB of the first data is associated with the priority of the first data;
the first information indicates a range to which a proportion of the first PDB to the PDB of the first data belongs, and the PDB of the first data is associated with the priority of the first data;
the first information indicates a range to which the first PDB belongs; or
the first information comprises the first PDB.

14. The method according to claim 13, wherein the first information comprises a first field, and the first information comprises the first PDB; and
if a value of the first field is a first value, it indicates that the first PDB is greater than or equal to 2ⁿ - 1, wherein n represents a quantity of bits occupied by the first field; or
if a value of the first field is not a first value, the value of the first field is the first PDB.

15. The method according to any one of claims 8 to 14, wherein the feedback channel associated with the first reserved resource and the feedback channel associated with the second reserved resource have an intersection in time domain, and have no intersection in code domain and/or frequency domain.

16. A communication apparatus, comprising a processor and a memory, wherein the memory is coupled to the processor, and the processor is configured to perform the method according to any one of claims 1 to 7, or configured to perform the method according to any one of claims 8 to 15.

17. A computer-readable storage medium, wherein the computer-readable storage medium is configured to store a computer program, and when the computer program is run on a computer, the computer is enabled to perform the method according to any one of claims 1 to 7, or the computer is enabled to perform the method according to any one of claims 8 to 15.

18. A chip system, wherein the chip system comprises:
a processor and an interface, wherein the processor is configured to: invoke instructions from the interface and run the instructions, and when executing the instructions, the processor implements the method according to any one of claims 1 to 7, or implements the method according to any one of claims 8 to 15.

19. A computer program product, wherein the computer program product comprises a computer program, and when the computer program is run on a computer, the computer is enabled to perform the method according to any one of claims 1 to 7, or the computer is enabled to perform the method according to any one of claims 8 to 15.
